(19) Europäisches Patentamt
European Patent Office
Office européen des brevets

(11) Numéro de publication: **0 324 698**
**A1**

## (12) DEMANDE DE BREVET EUROPEEN

(21) Numéro de dépôt: 89400116.3

(22) Date de dépôt: 13.01.89

(51) Int. Cl.⁴: **F 16 K 11/074**

(30) Priorité: 15.01.88 FR 8800430

(43) Date de publication de la demande:
19.07.89 Bulletin 89/29

(84) Etats contractants désignés:
AT BE CH DE GB IT LI SE

(71) Demandeur: COMMISSARIAT A L'ENERGIE ATOMIQUE
31/33, rue de la Fédération
F-75015 Paris (FR)

(72) Inventeur: Baudin, Jean-Claude
9 Allée des Tilleuls
F-91940 Les Ulis (FR)

Couterne, Jean-Claude
13, Pavé des Gardes
F-92370 Chaville (FR)

Le Potier, Dominique
36, Avenue Paul Vaillant Couturier
F-78190 Trappes (FR)

(74) Mandataire: Mongrédien, André et al
c/o BREVATOME 25, rue de Ponthieu
F-75008 Paris (FR)

(54) **Vanne pour le transfert de produits pulvérulents ou liquides sous atmosphère contrôlée.**

(57) Vanne comprenant un collecteur (1') et un sélecteur (4') tournant.

Deux passages (44, 48) permettent de faire communiquer un premier conduit (5) avec un deuxième (20) ou un troisième (21) conduit. On obtient une excellente séparation entre ces derniers. Le conduit supérieur (20) surplombe avantageusement (46, 47) le conduit inférieur (5).

Application au transvasement sous vide de poudres lors, par exemple, d'une opération de remplissage d'enveloppes destinées à un pressage isostatique à chaud.

FIG. 4

EP 0 324 698 A1

Bundesdruckerei Berlin

**Description**

## VANNE POUR LE TRANSFERT DE PRODUITS PULVERULENTS OU LIQUIDES SOUS ATMOSPHERE CONTROLEE

### DESCRIPTION

La présente invention a pour objet une vanne pour le transfert de produits pulvérulents ou liquides sous atmosphère contôlée à l'aide d'une pièce appelée sélecteur qui comprend deux passages distincts.

Des systèmes distributeurs faisant communiquer tour à tour un conduit avec plusieurs autres sont forts nombreux. On peut citer en particulier ceux qui comprennent un boisseau et un tournant. Toutefois, les dispositifs connus ne présentent pas des garanties d'étanchéité suffisantes entre les conduits : des produits contaminés ou polluants ayant transité entre le premier conduit et un second conduit peuvent toujours, à la suite de rotations successives du tournant, aboutir dans un conduit . L'étanchéité vis-à-vis de l'extérieur est également souvent insuffisante. De plus, pour des dimensions imposées des conduits, ces systèmes de distribution sont relativement encombrants.

L'invention a donc pour objet principal d'assurer une étanchéité totale entre les différents conduits qui peuvent être mis en communication avec le premier conduit. Elle a pour objet secondaire, surtout dans les réalisations décrites plus loin, d'assurer cette fonction technologique tout en étant très compacte et peu onéreuse.

Dans sa forme la plus générale, l'invention concerne une vanne mettant en communication un premier conduit avec un deuxième conduit ou un troisième conduit et composée de deux pièces, un collecteur et un sélecteur, en déplacement relatif, les trois conduits étant chacun liés à une des pièces, caractérisée en ce que le sélecteur comprend un passage mettant en communication le premier conduit et le troisième conduit, et en ce qu'une des pièces comprend une paroi délimitant un autre passage entre le premier conduit et le deuxième conduit, le premier conduit, ledit autre passage et le deuxième conduit constituant trois parties en prolongement d'un chenal quand le premier conduit et le deuxième conduit sont mis en communication, les parties du chenal appartenant à des pièces différentes étant alors en surplomb, la vanne comprenant en outre des dispositifs d'étanchéité entre le collecteur et le sélecteur pour séparer le deuxième conduit du troisième conduit ainsi que pour séparer le troisième conduit du premier conduit quand le premier conduit communique avec le deuxième conduit.

Cette disposition permet un écoulement intégral de la matière à transvaser à traver la vanne, du deuxième conduit vers le premier conduit, sans que rien ne demeure dans la vanne et ne puisse ensuite passer dans le troisième conduit ou vers l'extérieur.

Dans la réalisation préférée, le sélecteur est un disque tournant, renfermé dans le collecteur, la paroi appartient au sélecteur et le passage correspondant traverse le disque tournant suivant son épaisseur.

Une autre conception est également envisageable, d'après laquelle le sélecteur est en partie extérieur au collecteur, le premier conduit se raccorde au sélecteur et présente une partie souple pour suivre les déplacements de ce dernier.

On va maintenant décrire l'invention à l'aide des figures suivantes données à titre illustratif et non limitatif :

   - la figure 1 représente en éclaté une coupe diamétrale des pièces utilisées pour une réalisation possible de l'invention,

   - les figures 2 et 3 représentent en vue de dessus avec coupe partielle deux états de fonctionnement de la vanne de la figure 1 ;

   les figures 4, 5 et 6 représentent une autre réalisation de l'invention suivant des représentations analogues aux figures 1, 2 et 3.

D'après les figures, la vanne comprend un collecteur 1 formé d'une paroi circulaire 2 de faible hauteur qui s'élève sur un fond plat 3. Une pièce 4 constituant un sélecteur est logée de façon à être entourée par la paroi circulaire 2. Elle est traversée par l'orifice 6 d'un premier conduit 5 qui comprend une partie souple telle qu'un soufflet 33 ou un raccord flexible. Une bride de serrage 7 reliée à la paroi circulaire 2 par des vis 8 maintient en place le sélecteur 4 qui peut simplement tourner autour de son centre. Une butée 9, ici un pion, est solidaire de la bride de serrage 7.

La face 10 du sélecteur 4 comporte un épaulement 11 où se loge un joint d'étanchéité 12 qui vient au contact des faces internes de la paroi circulaire 2 et du fond plat 3 et une rainure intérieure 13 où débouche l'orifice 6.

Le collecteur 1 porte des raccordements à un deuxième conduit 20 et un troisième conduit 21 qui débouchent dans le collecteur 1, en face de la rainure intérieure 13, après avoir traversé le fond 3. Le troisième conduit 21 débouche plus précisément dans un grand compartiment 23 délimité par le fond 3, le sélecteur 4 et la paroi circulaire 2 essentiellement. Quant au au deuxième conduit 20, il se rétrécit en entonnoir avant de déboucher dans un petit compartiment 22 délimité par une paroi 24 s'élevant du fond 3 et entièrement entouré par le grand compartiment 23. La section du deuxième conduit 20 peut être contenue dans la section de l'orifice 6 qui est donc de dimensions quelque peu plus importantes. La paroi 24 porte sur sa circonférence extérieure un joint d'étanchéité interne 25 qui frotte contre le fond 26 de la rainure intérieure 13 et isole donc les deux compartiments 22 et 23 ; le joint d'étanchéité externe 12 isole le grand compartiment 23 de l'extérieur.

Le sélecteur 4 comprend également, sur la périphérie de sa face externe 27 opposée à la face 10, une rainure en arc de cercle 28 s'étendant sur un angle d'environ 80°.

On va maintenant décrire le fonctionnement de l'invention en liaison avec une application principale envisagée : le transvasement sous vide de poudre depuis un stockage vers des conteneurs de dimensions plus modestes (remplissage d'enveloppes destinées à des opérations de pressage isostatique).

On suppose alors que les premier et deuxième conduits 5 et 20 sont verticaux, le deuxième situé au-dessus du premier. Une étanchéité sous vide est nécessaire ; elle est rendue possible par les joints d'étanchéité 12 et 25 qui isolent les conduits entre eux et avec l'extérieur.

L'alimentation en poudre, reliée au deuxième conduit 20, est désigné par 30 et le conteneur à remplir, relié au premier conduit 5, par 31. Une pompe à vide 32 est reliée au troisième conduit 21.

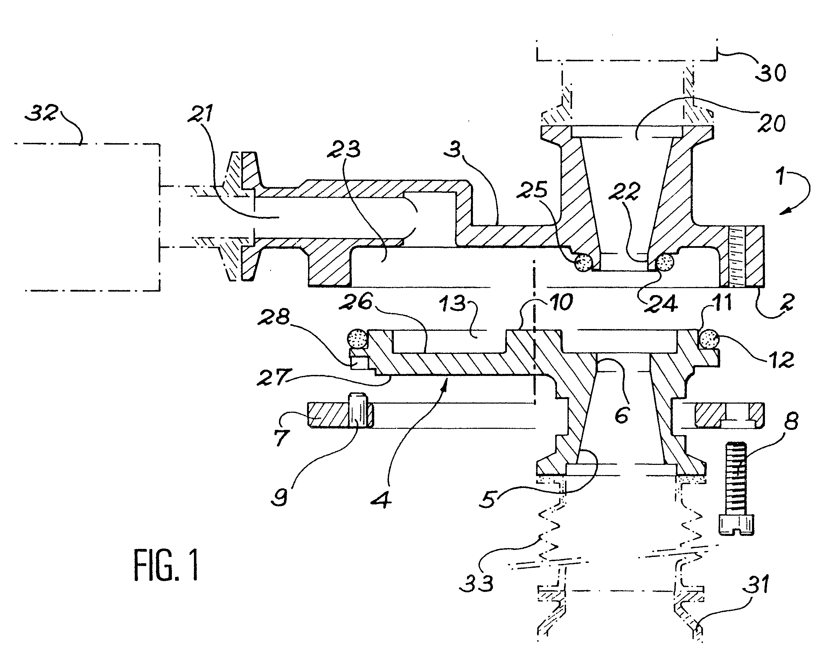

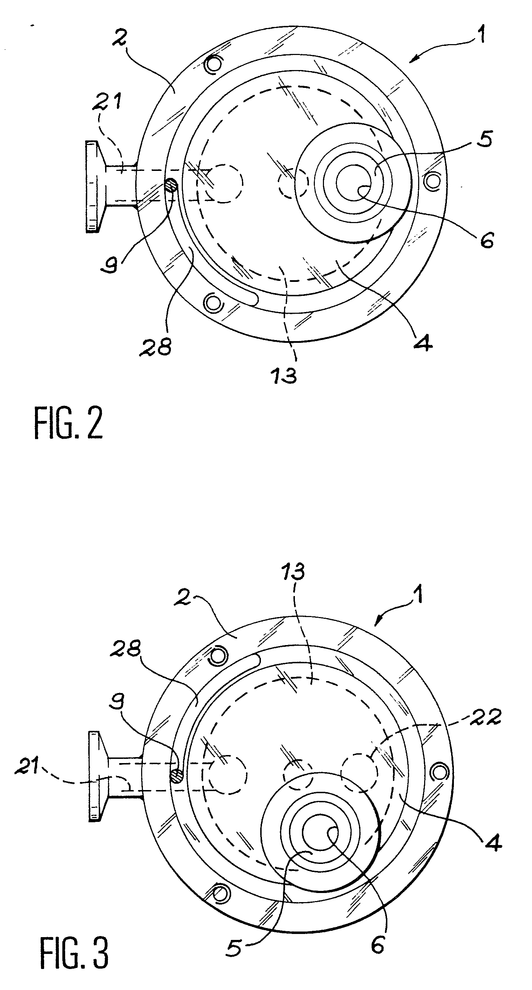

On se trouve d'abord en position représentée figure 2, qui correspond également à la position des pièces sur la figure 1 : le deuxième conduit 20 et le premier conduit 5 sont face à face, c'est-à-dire que l'orifice 6 communique avec le petit compartiment 22, ils constituent des parties en prolongement d'un chenal. Le système d'alimentation en poudre assure un écoulement vertical par le chenal vers le conteneur 31. Au cours de cette opération, le compartiment 22 est entièrement enveloppé par l'orifice 6, c'est-à-dire que la paroi 24 surplombe l'orifice 6 : aucun grain de poudre ne peut tomber sur le fond 26 de la rainure 13.

Quand le remplissage est terminé, l'alimentation en poudre est stoppée, le conteneur 31 est scellé et retiré. Le sélecteur 4 est alors mû en rotation autour de son axe. La butée 9, qui était jusqu'ici en contact avec une des extrémités de la rainure 28, finit par entrer en contact avec l'autre extrémité de cette rainure 28 et on aboutit à la configuration de la figure 3. Le deuxième conduit 20 débouche maintenant par son petit compartiment 22 sur une zone pleine de la surface du fond 26 de la rainure intérieure 13 et se trouve donc obstrué. Le premier conduit 5 débouche par contre dans le grand compartiment 23 en liaison avec le troisième conduit 21. Un conteneur vide est alors raccordé, lequel est mis sous vide par la pompe 32. Ici encore, les joints 12 et 25 permettent d'établir l'étanchéité vis-à-vis de l'extérieur et du deuxième conduit 20. Le sélecteur 4 peut être mû par tout moyen manuel ou mécanique approprié, sur sa face extérieure 27 ou sur le premier conduit 5.

Comme aucun grain de poudre ne demeure sur le fond 26 de la rainure 13, la pompe 32 et le milieu extérieur échappent à toute pollution. Le cycle d'opérations de remplissage peut ensuite recommencer par retour à la première position (remplissage).

Les joints 12 et 25 sont donc des joints dynamiques, c'est-à-dire que les surfaces entre lesquelles ils sont établis sont en mouvement relatif ; des essais réalisés avec des joints en qualité standard ont montré que plusieurs dizaines d'allers-retours du sélecteur 4 pouvaient être effectués sans dommage. Compte tenu du prix modique des joints et de la nécessité de prendre des précautions pour assurer une sécurité absolue, leur remplacement est effectué périodiquement et très facilement. On peut même envisager de jeter fréquemment la vanne entière, dont le prix est bas.

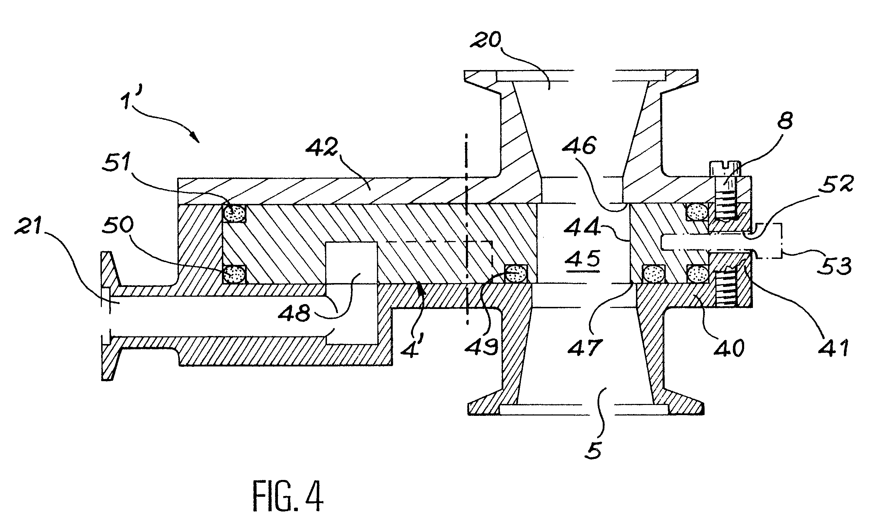

Les figures 4, 5 et 6 représentent une autre réalisation de l'invention. On retrouve le premier conduit 5, le deuxième conduit 20 et le troisième conduit 21, un collecteur 1' et un disque tournant 4' correspondant au sélecteur, mais cette fois-ci le disque tournant 4' est disposé dans le collecteur 1' et les trois conduits sont tous liés au collecteur 1'. Par conséquent, la partie souple 33 du premier conduit 5 n'est plus nécessaire.

Le collecteur 1' se compose de deux pièces assemblées par des vis 8 : l'une d'entre elles comprend une surface plane 40 que traversent les extrémités du premier conduit 5 et du troisième conduit 21 ainsi qu'une paroi circulaire 41 qui s'élève à la périphérie de la surface plane 40. L'autre pièce comprend essentiellement une surface plane opposée 42 que traverse l'extrémité du deuxième conduit 20 et qui est posée sur le sommet de la paroi circulaire 41. Le disque tournant 4' est donc logé entre les deux surfaces plane et parallèle 40 et 42 ; il est entouré par la paroi circulaire 41. Il peut tourner autour de son axe de révolution à l'intérieur de cet espace.

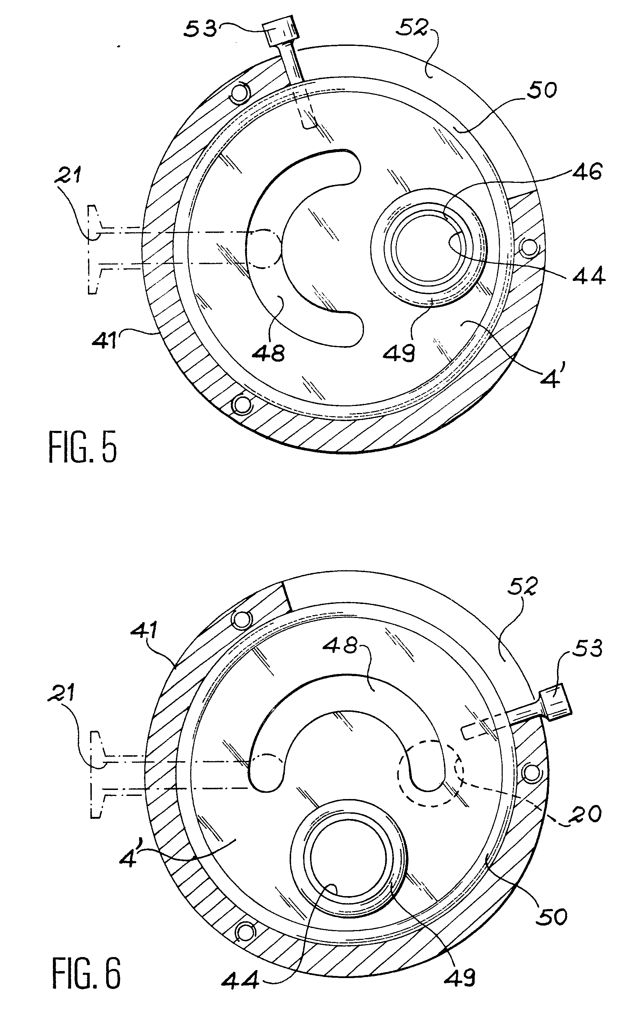

Le disque tournant 4' comprend une paroi 44 qui le traverse de part en part suivant son épaisseur et qui délimite donc un conduit de liaison 45 de section circulaire. Comme dans cette réalisation les premier et deuxième conduits 5 et 20 sont face à face, le conduit de liaison 45 est à un emplacement qui lui permet, à une certaine position de rotation du disque tournant 4', représentée figures 4 et 5, de les faire communiquer. Suivant une disposition analogue à celle de la réalisation précédente, les premier et deuxième conduits 5 et 20 sont verticaux, le deuxième situé au-dessus du premier, et les diamètres du deuxième conduit 20, du conduit de liaison 45 et du premier conduit 5, qui forment trois parties successives en prolongement d'un chenal, sont croissants, si bien que le deuxième conduit 20 présente un surplomb 46 sur le conduit de liaison 45 et que la paroi 44 présente un autre surplomb 47 sur l'extrémité du premier conduit 5.

Une rainure en arc de cercle 48 est creusée sur la face du disque tournant en regard de la première surface plane 40. Suivant une certaine position de rotation du disque tournant 4' différente de celle des figures 4 et 5 mais représentée figure 6, cette rainure 48 peut mettre en liaison le premier conduit 5 et le troisième conduit 21.

Le disque tournant 4' comprend encore des gorges pour trois joints d'étanchéité : l'un d'entre eux 49 entoure la paroi 44 et frotte contre la face interne de la surface plane 40 portant le premier conduit 5, un deuxième 50 frotte contre la jonction des faces intérieures de cette même surface plane 40 et de la paroi circulaire 41, et le troisième 51 frotte contre les faces internes de la paroi circulaire 41 et de la surface plane opposée 42. Le premier joint 49 empêche dans la position des figures 4 et 5 la communication entre le premier conduit 5 et le troisième conduit 21, et les deuxième et troisième joints 50 et 51 empêchent plus spécialement la communication des conduits avec l'extérieur.

Ici encore, une rainure 52 en arc de cercle peut être prévue pour délimiter des positions de butée.

Ici, elle traverse la paroi circulaire 41, entre les deuxième et troisième joints 50 et 51. Une butée 53 dépasse de l'épaisseur du disque 4' et s'étend dans la rainure 52. Elle peut être prolongée vers l'extérieur par une poignée ; elle sert alors également à actionner le disque 4'.

Cette deuxième réalisation peut servir aux mêmes applications que la première avec le même fonctionnement d'ensemble. Elle peut être à peu près aussi compacte mais son étanchéité est un peu plus compliquée à réaliser. Cet inconvénient est compensé par le fait que le premier conduit 5 est fixe et ne nécessite donc plus de partie souple 33 plus vulnérable.

On voit que l'invention est de structure fort simple tout en répondant à des exigences difficiles de sécurité et d'étanchéité. De plus, elle peut être rendue particulièrement compacte. Il suffit pour cela de réduire la hauteur du sélecteur 4 ou 4' et de la paroi circulaire 2 ou 41.

D'autres réalisations équivalentes peuvent évidemment être proposées sans sortir du cadre de l'invention. Par ailleurs, d'autres applications peuvent être envisagées : tous les matériaux granulaires, pulvérulents ou liquides peuvent être transvasés sans risque et sans perte, même les plus polluants ; la pompe à vide 32 peut être remplacée par exemple par une bouteille de gaz établissant une atmosphère contrôlée dans la vanne ou par une conduite de rinçage.

## Revendications

1. Vanne mettant en communication un premier conduit (5) avec un deuxième conduit (20) ou un troisième conduit (21) et composée de deux pièces, un collecteur (1) et un sélecteur (4), en déplacement relatif, les trois conduits étant chacun liés à une des pièces, caractérisée en ce que le sélecteur comprend un passage (13, 48) mettant en communication le premier conduit et le troisième conduit, et en ce qu'une des pièces comprend une paroi (24, 44) délimitant un autre passage entre le premier conduit et le deuxième conduit, le premier conduit, ledit autre passage et le deuxième conduit constituant trois parties en prolongement d'un chenal quand le premier conduit et le deuxième conduit sont mis en communication, les parties du chenal appartenant à des pièces différentes étant alors en surplomb, la vanne comprenant en outre des dispositifs d'étanchéité (25, 49) entre le collecteur et le sélecteur pour séparer le deuxième conduit du troisième conduit et pour séparer le troisième conduit du premier conduit quand le premier conduit communique avec le deuxième conduit.

2. Vanne selon la revendication 1, caractérisée en ce que le sélecteur présente une partie plane (4, 4').

3. Vanne selon la revendication 2, caractérisée en ce que la partie plane (4, 4') est un disque tournant.

4. Vanne selon la revendication 3, caractérisée en ce que le sélecteur (4') est enfermé dans le collecteur (1'), en ce que la paroi (44) appartient au sélecteur et que le passage correspondant traverse le disque tournant suivant son épaisseur.

5. Vanne selon la revendication 4, caractérisée en ce que le passage mettant en communication le premier conduit et le troisième conduit est une rainure (48) établie sur une surface du disque.

6. Vanne selon la revendication 3, caractérisée en ce que le premier conduit (5) est lié au disque tournant (4) et présente une partie souple (33), et en ce que la paroi (24) est liée au collecteur (1).

7. Vanne selon la revendication 6, caractérisée en ce que le passage mettant en communication le premier et le troisième conduits est une rainure (13) établie sur une surface du disque (4).

8. Vanne selon la revendication 1, caractérisée en ce que le collecteur et le sélecteur se déplacent entre deux positions extrêmes par un mouvement de va-et-vient, une des positions correspondant à la communication entre le premier et le deuxième conduits, l'autre à la communication entre le premier et le troisième conduits, les positions extrêmes étant des positions de butée.

FIG. 1

EP 0 324 698 A1

FIG. 2

FIG. 3

FIG. 4

EP 0 324 698 A1

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 600 982  (IRRICO)<br>* figure 1 *<br>--- | 1-5,7,8 | F 16 K  11/074 |
| A | US-A-2 367 319  (WAHLBERG)<br>* figure 4 *<br>--- | 1-4,8 | |
| A | FR-A-1 565 619  (CHENELLE)<br>* figures 3-6 *<br>--- | 1-3,5,7 ,8 | |
| A | DE-B-1 800 135  (KARPATSCHEWA et al.)<br>* figures 3-6 *<br>----- | 1-3,8 | |

DOMAINES TECHNIQUES
RECHERCHES (Int. Cl.4)

F 16 K  11/00

Le présent rapport a été établi pour toutes les revendications

| Lieu de la recherche | Date d'achèvement de la recherche | Examinateur |
|---|---|---|
| BERLIN | 13-03-1989 | SCHLABBACH M |